# EUROPÄISCHE PATENTSCHRIFT

(11) **EP 2 703 119 B1**
(45) Veröffentlichungstag und Bekanntmachung des Hinweises auf die Patenterteilung: **22.07.2015**
(21) Anmeldenummer: 13004103.1
(22) Anmeldetag: 19.08.2013
(51) Int. Cl.: B23Q 1/54

(54) **Bearbeitungsmaschine**
Machining unit
Machine de traitement

(30) Priorität: 31.08.2012 DE 102012017257
(43) Veröffentlichungstag der Anmeldung: 05.03.2014
(73) Patentinhaber: Reichenbacher Hamuel GmbH, 96487 Dörfles-Esbach (DE)
(72) Erfinder: Czwielong, Thomas, 96271 Grub am Forst (DE); Zarske, Wolfgang, 96465 Neustadt (DE)
(74) Vertreter: Paustian, Othmar

(56) Entgegenhaltungen:
- JP-A- S6 048 227
- US-A- 3 460 435
- US-A- 4 715 102
- US-A1- 2012 103 947

## Beschreibung

Die Erfindung bezieht sich auf eine Bearbeitungsmaschine mit einem Haltearm, der um eine Drehachse drehbar ist, und einem Bearbeitungsaggregat, das einen Lagerabschnitt und einen Revolverkopf aufweist, wobei der Lagerabschnitt an dem Haltearm um eine Schwenkachse schwenkbar gelagert ist und der Revolverkopf an dem Lagerabschnitt um eine Revolverachse drehbar gelagert ist, die zur Schwenkachse in einer zu beiden Achsen parallelen Fläche unter einem Winkel β verläuft, der größer ist als 0°.

Solche Bearbeitungsmaschinen ermöglichen es, ein Werkstück nicht nur von einer Seite - beispielsweise vertikal von oben - zu bearbeiten, sondern auch die unmittelbar daran anschließenden Seiten des Werkstückes durch Verschwenken des Bearbeitungsaggregats zu bearbeiten, wobei die Schwenkachse senkrecht zur Drehachse des Haltearms verläuft. Die Bearbeitungsaggregate können einzelne Arbeitsspindeln sein, z. B. Frässpindeln, in denen sich ein einzelnes Werkzeug befindet. Zum schnelleren Werkzeugwechsel werden auch Revolverköpfe eingesetzt, die mehrere Arbeitsspindeln aufweisen, in denen sich jeweils ein Werkzeug befindet. Die Revolverköpfe sind dabei üblicherweise als Sternrevolver ausgebildet, d. h. die Arbeitsspindeln sind auf einer Kreislinie angeordnet, wobei die Revolverachse senkrecht zur Kreisfläche durch deren Mittelpunkt verläuft und die Spindelachsen radial verlaufen. Durch Schwenken des Revolvers um die Revolverachse wird die jeweils gewünschte Arbeitsspindel mit ihrem Werkzeug in Arbeitsstellung gebracht.

Im Rahmen dieser Anmeldung werden unter dem Begriff "Revolverkopf" die beschriebenen Sternrevolver verstanden, einschließlich einer einzelnen Arbeitsspindel, deren Schwenkachse quer zur Spindelachse verläuft.

Es sind Revolverköpfe bekannt, bei denen die Schwenkachse als vollwertige NC-Achse ausgeführt ist. Damit ist es möglich, in Verbindung mit einer Bearbeitungsmaschine und der Drehachse, die auch als C-Achse bezeichnet wird, eine 5-Achsbearbeitung auszuführen.

Die Arbeitsspindeln können so durch Schwenken des Revolvers um die Revolverachse die Werkstückoberfläche nicht nur senkrecht, sondern auch unter einem Neigungswinkel der Spindelachse zur Senkrechten bearbeiten. Wenn die Spindelachse senkrecht oder nahezu senkrecht auf der zu bearbeitenden Oberfläche des Werkstücks steht, kann die Bearbeitung ohne Probleme erfolgen. Wird jedoch der Neigungswinkel der Arbeitsspindel zur Senkrechten größer, wird ihr Freiraum, d. h. die freie Zugänglichkeit der Werkstückkontur, durch die Störkontur der benachbarten Arbeitsspindeln stark eingeschränkt.

Aus US 3 460 435 A ist eine Bearbeitungsmaschine bekannt, bei der ein Bearbeitungsaggregat, das einen Lagerabschnitt und eine Werkzeugspindel aufweist, innerhalb eines gabelförmigen Haltearms gelagert ist. Der Haltearm ist um eine Drehachse b drehbar; der Lagerabschnitt ist um eine Schwenkachse a schwenkbar, die zur Drehachse b in einem Winkel von 90° verläuft. Die Werkzeugspindel ist im Lagerabschnitt um ihre Längsachse drehbar gelagert, wobei die Längsachse entweder mit der Drehachse b fluchtet oder diese - in um die Achse a verschwenkter Stellung - schneidet. Auf die Werkzeugspindel kann ein Werkzeug aufgesetzt werden. Es ist auch möglich, auf die Werkzeugspindel einen Werkzeughalter mit feststehenden Werkzeugen oder einen Revolverkopf aufzusetzen, wobei dann die Revolverachse mit der Längsachse der Werkzeugspindel übereinstimmt. Der Haltearm und der Lagerabschnitt sowie deren Kopplungseinrichtung bestehen aus zahlreichen Einzelteilen, was die Fertigung und Montage sehr aufwendig macht. Darüber hinaus ist der Schwenkbereich des Lagerabschnitts mit daran angebrachtem Werkzeug, insbesondere bei einem Revolverkopf, aufgrund der Kollision mit der Kontur des Haltearms eingeschränkt. Auch wird die freie seitliche Zugänglichkeit zu einem Werkstück aufgrund der störenden Kontur des Haltearms stark eingeschränkt. Wird der Abstand zwischen Haltearm und Revolverkopf vergrößert, um diese Störungen zu vermeiden, treten bei zur Seite verschwenktem Revolverkopf große Exzentrizitäten zwischen der vertikalen Kraftkomponente am Werkzeug des Revolverkopfes und der Drehachse b des Haltearms auf.

Demgegenüber liegt die Aufgabe der Erfindung darin, eine gattungsgemäße Bearbeitungsmaschine so zu verbessern, dass ihre Herstellung vereinfacht wird und gleichzeitig der Zugang zur Werkstückkontur weniger eingeschränkt ist.

Durch die erfindungsgemäßen Maßnahmen können Werkstücke auch mit Revolverköpfen unter großen Neigungswinkeln zwischen Spindelachse und der Senkrechten auf die zu bearbeitende Oberfläche bearbeitet werden. Dadurch, dass die Revolverachse zur Schwenkachse geneigt verläuft und die Schwenkachse ihrerseits zur Drehachse unter einem Winkel verläuft, der mindestens 45° beträgt und kleiner ist als 90°, bevorzugt höchstens 80°, beträgt, kann die Ausrichtung der Revolverachse und damit die Ausrichtung des Revolverkopfes zum Werkstück in weitem Maße verändert werden. So ist es möglich, einen Revolverkopf so auszurichten, dass der Neigungswinkel einer Spindelachse zur Senkrechten auf die zu bearbeitende Werkstückoberfläche quer zu einer Ebene verläuft, die senkrecht zur Revolverachse liegt und nicht - wie im Stand der Technik - in einer solchen Ebene. Eine Ebene, die senkrecht zur Revolverachse verläuft, wird im Folgenden als Revolverebene bezeichnet wird. Aufgrund der erfindungsgemäßen Ausrichtungsmöglichkeit der Revolverebene wird der Freiraum einer Arbeitsspindel für das Unterschwenken beträchtlich vergrößert, da die Störkontur der benachbarten Arbeitsspindeln quer zur Revolverebene einen deutlich geringeren Einfluss hat bzw. deutlich geringere Ausmaße hat. Beispielsweise kann die Revolverebene aus einer Stellung, in der sie bzw. die Arbeitsspindeln eines Sternrevolvers in einer vertikalen Ebene liegt/liegen, in eine Stellung gedreht werden, in der sie bzw. diese Arbeitsspindel-Ebene horizontal liegt. Aus einer solchen Stellung heraus können z. B. vertikale Werkstückoberflächen unter einem großen Neigungswinkel der Arbeitsspindel zur Senkrechten auf die Werkstückoberfläche bearbeitet werden, ohne dass die benachbarten Arbeitsspindeln des Revolverkopfes stören.

Entsprechend den jeweiligen Anforderungen bezüglich der Möglichkeiten der Werkstückbearbeitung und des zur Verfügung stehenden Arbeitsraumes können die Winkel zwischen Revolverachse und Schwenkachse sowie zwischen Schwenkachse und Drehachse aufeinander abgestimmt werden, um in Verbindung mit der jeweiligen Anzahl der Arbeitsspindeln des Revolverkopfes optimale Störkonturen und eine freie Zugänglichkeit der Werkstückkontur zu erhalten.

Vorzugsweise beträgt der Winkel β zwischen Revolverachse und Schwenkachse mindestens 90° -α. Auf diese Weise ergibt sich, wenn Drehachse, Schwenkachse und Revolverachse zur selben Ebene parallel sind, zwischen der Drehachse und der Revolverachse ein Winkel von mindestens 90°. Mit dieser Maßnahme wird sicher gestellt, dass die Revolverachse in eine zur Drehachse senkrechte Lage gebracht werden kann, so dass auch die herkömmliche 90°-Anordnung von Drehachse und Revolverachse einstellbar ist.

In günstiger Weiterentwicklung der Erfindung weist der Revolverkopf mindestens eine Werkzeugaufnahme mit einer Werkzeugachse auf, die zur Revolverachse unter einem Winkel γ verläuft, der mindestens 45° und höchstens 90° beträgt. Mit dieser Maßnahme werden die Variationsmöglichkeiten für die Ausrichtung der Werkzeugachsen noch einmal vergrößert. Zudem werden die Störkonturen weiter verringert und der Revolverkopf kompakter ausgebildet. Der Winkel zwischen Revolverachse und Schwenkachse wird dann um 90° -β vergrößert.

Vorteilhafterweise schneidet die Schwenkachse die Drehachse und/oder die Revolverachse die Schwenkachse und/oder jede Spindel- bzw. Werkzeugachse die Revolverachse. Mit diesen Maßnahmen werden die jeweilige Exzentritätsmomente vermieden, so dass die Bearbeitungsmaschine entsprechend einfacher und kostengünstiger ausgelegt werden kann.

Bevorzugt sind die Winkel α, β, γ zwischen Drehachse und Schwenkachse, Schwenkachse und Revolverachse sowie Revolverachse und Werkzeugachse so aufeinander abgestimmt, dass die Werkzeugachse in eine zur Drehachse parallele Lage bringbar ist, wenn Drehachse, Schwenkachse und Revolverachse und Werkzeugachse zur selben Ebene parallel verlaufen. In einer solchen Stellung kann eine erfindungsgemäße Bearbeitungsmaschine wie eine herkömmliche Bearbeitungsmaschine bedient werden und arbeiten.

Vorteilhafterweise ist der Haltearm an einem ersten Ende drehbar gelagert und ragt von dort aus frei vor und verläuft die Schwenkachse durch den Endbereich nahe dem zweiten, freien Ende. Diese Ausbildung bietet den maximalen Bewegungsfreiraum für den Revolverkopf, da dieser sich dann auch vor dem freien Ende des Haltearms bewegen kann.

Bevorzugt ist der Lagerabschnitt auf dem Abschnitt der Schwenkachse angeordnet, die mit der Drehachse den Winkel α einschließt, der zum freien Ende hin öffnet. Hierdurch wird der Bewegungsfreiraum des Revolverkopfes noch weiter vergrößert.

In einer bevorzugten Ausführungsform der Erfindung weist der Haltearm entlang der Drehachse einseitig eine Aussparung auf, die sich vom freien Ende aus bis zu einem vorgegebenen Abstand vom ersten Ende erstreckt und quer zur Drehachse offen ist und zur Aufnahme des Lagerabschnitts und des Revolverkopfes eingerichtet ist. Mit diesen Maßnahmen wird der Raumbedarf der Bearbeitungsmaschine beträchtlich verkleinert, wobei gleichzeitig ein großer Bewegungsfreiraum für den Revolverkopf erhalten bleibt.

Die Erfindung wird nachfolgend anhand der Zeichnungen beispielshalber noch näher erläutert. Es zeigen:
- Figur 1: in einer Vorderansicht Haltearm und Revolverkopf einer ersten Ausführungsform einer erfindungsgemäßen Bearbeitungsmaschine;
- Figur 2: eine Seitenansicht des Haltearms und des Revolverkopfes aus Figur 1, einschließlich Lagerabschnitt;
- Figur 3: eine der Figur 2 ähnliche Seitenansicht, wobei der Revolverkopf um 180° geschwenkt ist;
- Figur 4: Haltearm, Lagerabschnitt und Revolverkopf in den Arbeitsstellungen aus den Figuren 1 und 3 sowie in einer Arbeitsstellung, die gegenüber der aus Figur 3 um 180° um die Drehachse gedreht ist, in Bezug auf ein Werkstück;
- Figur 5: eine Perspektivansicht von Haltearm und Revolverkopf einer zweiten Ausführungsform einer erfindungsgemäßen Bearbeitungsmaschine; und
- Figur 6: eine Seitenansicht des Haltearms und des Revolverkopfes aus Figur 5, einschließlich Lagerabschnitt.

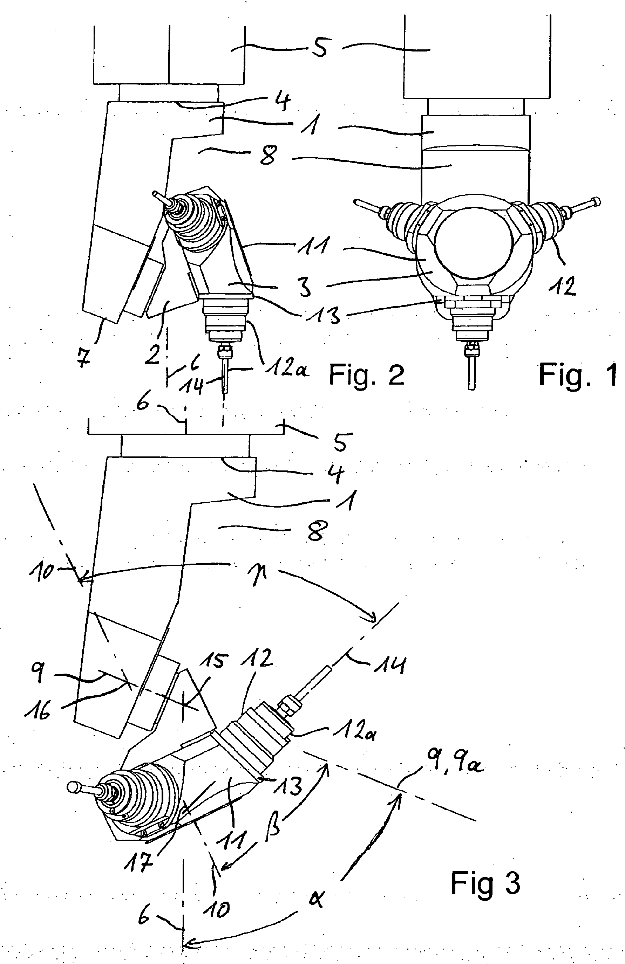

In den Figuren 1 bis 4 sind Haltearm 1, Lagerabschnitt 2 und Revolverkopf 3 eines ersten Ausführungsbeispiels einer erfindungsgemäßen Bearbeitungsmaschine dargestellt.

Der Haltearm 1 ist länglich ausgebildet und mit seinem ersten Ende 4 an einem Grundgestell 5, beispielsweise an einem Schlitten, um eine Drehachse 6 drehbar gelagert. Der Schlitten 5 kann vertikal verfahrbar sein und seinerseits an einem (nicht dargestellten) Rahmen befestigt sein, mit dem der Schlitten 5 horizontal verfahrbar ist.

Von seinem ersten Ende 4 aus ragt der Haltearm 1 längs der Drehachse 6 bis zu seinem zweiten Ende 7 frei vor. Von dem zweiten, freien Ende 7 aus erstreckt sich im Haltearm 1 eine Aussparung 8 bis zu einem vorgegebenen Abstand von seinem ersten Ende 4. Die Aussparung 8 öffnet quer zur Drehachse 6 und erstreckt sich quer zur Drehachse 6 etwa über die Hälfte des Haltearms 1.

Der Lagerabschnitt 2 sitzt in der Aussparung 8 nahe dem freien Ende 7 des Haltearms 1 und ist um eine Schwenkachse 9 verschwenkbar an dem Haltearm 1 befestigt, die im dargestellten Ausführungsbeispiel mit der Drehachse 6 einen Winkel α von etwa 70° einschließt. Der Lagerabschnitt 2 sitzt auf dem Abschnitt 9a der Schwenkachse 9, der sich vom ersten Ende 4 des Haltearms 1 weg erstreckt, d. h. in Figur 3 nach unten gerichtet ist.

An dem Lagerabschnitt 2 ist der Revolverkopf 3 um eine Revolverachse 10 drehbar befestigt, die zur Schwenkachse 9 unter einem vorgegebenen Neigungswinkel β verläuft, der größer als 0° ist. Im dargestellten Ausführungsbeispiel beträgt dieser Neigungswinkel β zwischen Revolverachse 10 und Schwenkachse 9 etwa 40°.

Der Abstand des Revolverkopfes 3 von dem Haltearm 1, d. h. die Länge des Lagerabschnitts 2 in Richtung Revolverachse 10, ist so ausgelegt, dass der Revolverkopf 3 möglichst weit in die Aussparung 8 hineinragt, um den Raumbedarf von Haltearm 1, Lagerabschnitt 2 und Revolverkopf 3 möglichst gering zu halten, und dabei die Drehbarkeit des Revolverkopfes 3 um die Revolverachse 10 vollständig gewahrt ist.

Der Revolverkopf 3 weist ein zentrales Antriebselement 11 auf, dass sich quer zur Revolverachse 10 entlang einer Revolverebene scheibenförmig erstreckt und Antriebsmotoren zum Drehen des Revolverkopfes 3 um die Revolverachse 10 und zum Antrieb von Arbeitsspindeln 12 enthält. Am Umfang des Antriebselementes 11 sind eine vorgegebene Anzahl Antriebsspindeln 12 gleichmäßig verteilt, im in den Figuren 1 bis 4 dargestellten Ausführungsbeispiel sind es drei um 120° zueinander versetzt angeordnete Antriebsspindeln 12.

Der Revolverkopf 3 weist also drei Werkzeugaufnahmen 13 auf, in die jeweils eine Arbeitsspindel 12 eingesetzt ist. Die Werkzeugachsen 14 der Werkzeugaufnahmen 13 bzw. die Spindelachsen 14 der Arbeitsspindeln 12 sind jeweils zur Revolverachse 10 um einen Winkel γ geneigt, der im dargestellten Ausführungsbeispiel etwa 70° beträgt. Die Spindelachsen 14 weisen damit eine Richtungskomponente quer zur Revolverebene auf.

In Figur 2 ist der Fall dargestellt, dass die Drehachse 6, die Schwenkachse 9, die Revolverachse 10 und die Werkzeugachse 14 einer Werkzeugaufnahme 13, d. h. die Spindelachse 14 einer Arbeitsspindel 12, in der selben Ebene liegen und dabei diese Spindelachse 14 parallel zur Drehachse 6 verläuft.

Die Achsen 6, 9, 10, 14 sind so zueinander angeordnet, dass die Schwenkachse 9 die Drehachse 6 schneidet (Punkt 15), die Revolverachse 10 die Schwenkachse 9 schneidet (Punkt 16) und jede Werkzeugachse 14 die Revolverachse 10 schneidet (Punkt17).

Durch eine entsprechende Abstimmung der Größen der Neigungswinkel α, β, γ zwischen den Achsen 6, 9, 10, 14 und der gegenseitigen Abstände der Schnittpunkte 15, 16, 17 zwischen den Achsen 6, 9, 10, 14 kann der Bewegungsraum des Revolverkopfes 3, d. h. die Variationsvielfalt für die Arbeitsstellungen der Arbeitsspindeln 12, den jeweiligen Wünschen und Erfordernissen ohne weiteres angepasst werden.

Mit einer Verschwenkung um 180° um die Schwenkachse 9 aus der in Figur 2 dargestellten Stellung nimmt der Revolverkopf 3 die in Figur 3 dargestellte Position ein. Die in Figur 2 vertikal nach unten gerichtete Arbeitsspindel 12a ist in Figur 3 nunmehr unter einem vorgegebenen Neigungswinkel W nach oben geneigt, so dass ein Werkstück 18 mit diesem großen Neigungswinkel W bearbeitet werden kann.

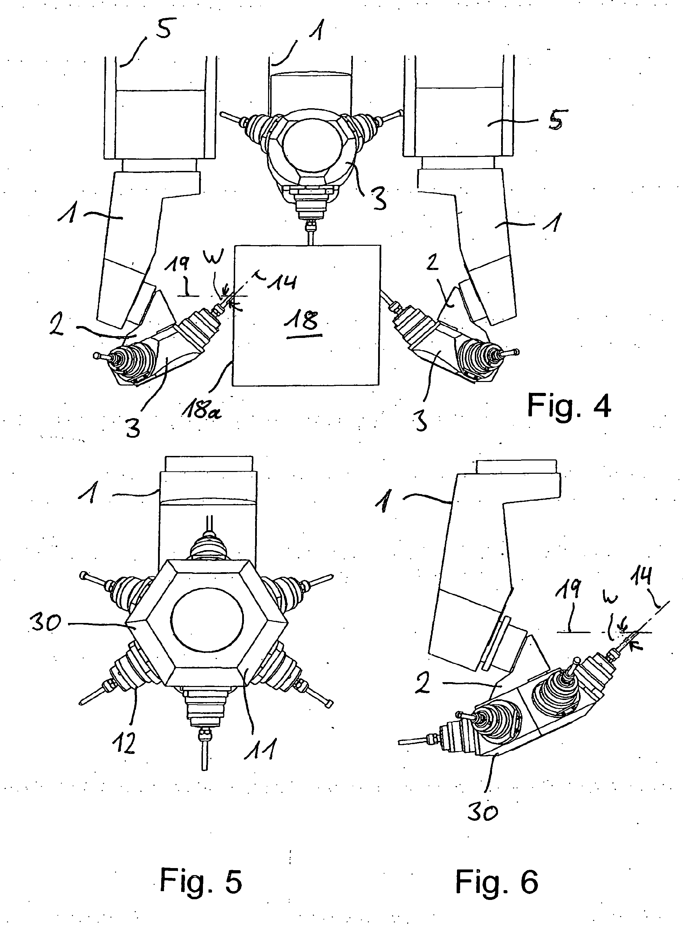

Wie in Figur 4 in den beiden seitlichen Arbeitspositionen des Revolverkopfes 3 dargestellt, sind die Arbeitsspindeln 12 unter einem relativ großen Winkel W zur Senkrechten auf die Werkstückoberfläche bzw. unter einem relativ kleinen Winkel zur Werkstückoberfläche geneigt. Dies ist möglich, da diese Neigungswinkel W zum Werkstück 18 quer zur Revolverebene, d. h. aus der Revolverebene heraus erfolgen, so dass die benachbarten Arbeitsspindeln 12 deutlich weniger stören als bei einer Bearbeitung des Werkstückes 18 unter einem Neigungswinkel in der Revolverebene, bei dem benachbarte Arbeitsspindeln 12 deutlich eher mit der Werkstückoberfläche 18a in Kontakt kommen würden.

Je mehr Arbeitsspindeln 12 ein Revolverkopf 3 aufweist, d. h. je kleiner der Abstand zu den benachbarten Arbeitsspindeln 12 wird, umso größer ist der Gewinn an Vergrößerung des Neigungswinkels W gegenüber einem möglichen Neigungswinkel in der Revolverebene.

In den Figuren 5 und 6 ist ein Revolverkopf 30 mit sechs um 60° zueinander versetzt angeordneten Arbeitsspindeln 12 dargestellt. Wie aus Figur 6 hervorgeht, sind auch bei einem solchen Revolverkopf 30 sehr große Neigungswinkel W gegenüber der Senkrechten 19 auf einer Werkstückoberfläche möglich bzw. kann eine Arbeitsspindel 12 sehr flach gegenüber der Werkstückoberfläche geneigt sein. Dagegen sind bei einer Neigung in der Revolverebene Neigungswinkel von maximal 30° möglich, nämlich 90°-60°, wenn die Arbeitsspindeln alle gleich lang sind.

## Patentansprüche

1. Bearbeitungsmaschine mit
einem Haltearm (1), der um eine Drehachse (6) drehbar ist, und
einem Bearbeitungsaggregat (2, 3), das einen Lagerabschnitt (2) und einen Revolverkopf (3) aufweist, wobei der Lagerabschnitt (2) an dem Haltearm (1) um eine Schwenkachse (9) schwenkbar gelagert ist und der Revolverkopf (3) an dem Lagerabschnitt (2) um eine Revolverachse (10) drehbar gelagert ist, die zur Schwenkachse (9) in einer zu beiden Achsen (9, 10) parallelen Fläche unter einem Winkel β verläuft, der größer ist als 0°,
**dadurch gekennzeichnet, dass**
der Lagerabschnitt (2) an einer Außenseite des Haltearms (1) um die Schwenkachse (9) schwenkbar gelagert ist und
die Drehachse (6) und die Schwenkachse (9) in einer zu beiden Achsen (6, 9) parallelen Ebene unter einem Winkel α zueinander verlaufen, der mindestens 45° beträgt und kleiner ist als 90°.

2. Bearbeitungsmaschine nach Anspruch 1, **dadurch gekennzeichnet, dass** der Winkel β zwischen Revolverachse (10) und Schwenkachse (9) mindestens 90°-α beträgt.

3. Bearbeitungsmaschine nach Anspruch 1 oder 2, **dadurch gekennzeichnet, dass** der Revolverkopf (3) mindestens eine Werkzeugaufnahme (13) mit einer Werkzeugachse (14) aufweist, die zur Revolverachse (10) unter einem Winkel γ verläuft, der mindestens 45° und höchstens 90° beträgt.

4. Bearbeitungsmaschine nach einem der Ansprüche 1 bis 3, **dadurch gekennzeichnet, dass** die Schwenkachse (9) die Drehachse (6) schneidet und/oder
die Revolverachse (10) die Schwenkachse (9) schneidet und/oder
jede Werkzeugachse (14) die Revolverachse (10) schneidet.

5. Bearbeitungsmaschine nach Anspruch 3 oder 4, **dadurch gekennzeichnet, dass** die Winkel α, β, γ zwischen Drehachse (6) und Schwenkachse (9), Schwenkachse (9) und Revolverachse (10) sowie Revolverachse (10) und Werkzeugachse (14) so aufeinander abgestimmt sind, dass die Werkzeugachse (14) in eine zur Drehachse (6) parallele Lage bringbar ist, wenn Drehachse (6), Schwenkachse (9), Revolverachse (10) und Werkzeugachse (14) zur selben Ebene parallel verlaufen.

6. Bearbeitungsmaschine nach einem der Ansprüche 1 bis 5, **dadurch gekennzeichnet, dass** der Haltearm (1) an einem ersten Ende (4) drehbar gelagert ist und von dort aus frei vorragt und die Schwenkachse (9) durch den Endbereich nahe dem zweiten, freien Ende (7) verläuft.

7. Bearbeitungsmaschine nach Anspruch 6, **dadurch gekennzeichnet, dass** der Lagerabschnitt (2) auf dem Abschnitt (9a) der Schwenkachse (9) angeordnet ist, die mit der Drehachse (6) den Winkel α einschließt, der zum freien Ende (7) hin öffnet.

8. Bearbeitungsmaschine nach Anspruch 6 oder 7, **dadurch gekennzeichnet, dass** der Haltearm (1) entlang der Drehachse (6) einseitig eine Aussparung (8) aufweist, die sich vom freien Ende (7) aus bis zu einem vorgegebenen Abstand vom ersten Ende (4) erstreckt und quer zur Drehachse (6) offen ist und zur Aufnahme des Lagerabschnitts (2) und des Revolverkopfes (3) eingerichtet ist.

## Claims

1. A machining center, comprising
a holding arm (1) which is rotatable about an axis of rotation (6), and
a machining unit (2, 3) which includes a bearing portion (2) and a turret head (3), wherein the bearing portion (2) is pivotally mounted on the holding arm (1) about a pivot axis (9) and the turret head (3) is rotatably mounted on the bearing portion (2) about a turret axis (10) which in a surface parallel to both axes (9, 10) extends at an angle β greater than 0° to the pivot axis (9),
**characterized in that**
the bearing portion (2) is pivotally mounted about the pivot axis (9) on an outside of the holding arm (1), and
the axis of rotation (6) and the pivot axis (9) extend at an angle α to each other, which is at least 45° and less than 90°, in a plane parallel to both axes (6, 9).

2. The machining center according to claim 1, **characterized in that** the angle β between turret axis (10) and pivot axis (9) is at least 90°-α.

3. The machining center according to claim 1 or 2, **characterized in that** the turret head (3) includes at least one tool holder (13) with a tool axis (14) which extends at an angle γ to the turret axis (10), which is at least 45° and not more than 90°.

4. The machining center according to any of claims 1 to 3, **characterized in that** the pivot axis (9) intersects the axis of rotation (6) and/or the turret axis (10) intersects the pivot axis (9) and/or each tool axis (14) intersects the turret axis (10).

5. The machining center according to claim 3 or 4, **characterized in that** the angles α, β, γ between axis of rotation (6) and pivot axis (9), pivot axis (9) and turret axis (10) as well as turret axis (10) and tool axis (14) are adjusted to each other such that the tool axis (14) can be brought into a position parallel to the axis of rotation (6), when axis of rotation (6), pivot axis (9), turret axis (10) and tool axis (14) extend parallel to the same plane.

6. The machining center according to any of claims 1 to 5, **characterized in that** the holding arm (1) is rotatably mounted at a first end (4) and from there protrudes freely, and the pivot axis (9) extends through the end region near the second, free end (7).

7. The machining center according to claim 6, **characterized in that** the bearing portion (2) is arranged on the portion (9a) of the pivot axis (9) which includes the angle α with the axis of rotation (6) that opens towards the free end (7).

8. The machining center according to claim 6 or 7, **characterized in that** along the axis of rotation (6) the holding arm (1) unilaterally includes a cutout (8) which extends from the free end (7) up to a specified distance from the first end (4) and is open transversely to the axis of rotation (6) and is adapted to accommodate the bearing portion (2) and the turret head (3).

## Revendications

1. Machine d'usinage, comprenant
un bras de maintien (1), qui est capable de rotation autour d'un axe de rotation (6), et
un groupe d'usinage (2, 3), qui comprend une portion de montage (2) et une tête revolver (3), dans lequel la portion de montage (2) est montée sur le bras de maintien (1) avec possibilité de pivotement autour d'un axe de pivotement (9), et la tête revolver (3) est montée sur la portion de montage (2) avec possibilité de rotation autour d'un axe de revolver (10), qui s'étend par rapport à l'axe de pivotement (9), dans une surface parallèle aux deux axes (9, 10), sous un angle β supérieur à 0°,
**caractérisée en ce que**
la portion de montage (2) est montée sur un côté extérieur du bras de maintien (1) avec possibilité de pivotement autour de l'axe de pivotement (9), et
l'axe de rotation (6) et l'axe de pivotement (9) s'étendent, dans un plan parallèle aux deux axes (6, 9), sous un angle α l'un par rapport à l'autre, qui est d'au moins 45° et inférieur à 90°.

2. Machine d'usinage selon la revendication 1, **caractérisée en ce que** l'angle β entre l'axe de revolver (10) et l'axe de pivotement (9) est au moins égal à 90° - α.

3. Machine d'usinage selon la revendication 1 ou 2, **caractérisée en ce que** la tête revolver (3) comprend au moins un récepteur à outils (13) avec un axe d'outil (14), qui forme par rapport à l'axe de revolver (10) un angle γ qui est d'au moins 45° et au maximum 90°.

4. Machine d'usinage selon l'une des revendications 1 à 3, **caractérisée en ce que** l'axe de pivotement (9) recoupe l'axe de rotation (6), et/ou
l'axe de revolver (10) recoupe l'axe de pivotement (9), et/ou
chaque axe d'outil (14) recoupe l'axe de revolver (10).

5. Machine d'usinage selon la revendication 3 ou 4, **caractérisée en ce que** les angles α, β, γ entre l'axe de rotation (6) et l'axe de pivotement (9), entre l'axe de pivotement (9) et l'axe de revolver (10), ainsi qu'entre l'axe de revolver (10) et l'axe d'outil (14) sont accordés les uns aux autres de telle façon que l'axe d'outil (14) peut être amené dans une situation parallèle à l'axe de rotation quand l'axe de rotation (6), l'axe de pivotement (9), l'axe de revolver (10) et l'axe d'outil (14) s'étendent parallèlement au même plan.

6. Machine d'usinage selon l'une des revendications 1 à 5, **caractérisée en ce que** le bras de maintien (1) est monté rotatif à une première extrémité (4) et fait saillie librement depuis celle-ci, et l'axe de pivotement (9) s'étend à travers la région terminale proche de la seconde extrémité libre (7).

7. Machine d'usinage selon la revendication 6, **caractérisée en ce que** la portion de montage (2) est agencée sur le tronçon (9a) de l'axe de pivotement (9) qui forme l'angle α avec l'axe de rotation (6), ledit angle étant ouvert vers l'extrémité libre (7).

8. Machine d'usinage selon la revendication 6 ou 7, **caractérisée en ce que** le bras de maintien (1) comporte le long de l'axe de rotation (6) et de manière unilatérale un évidement (8) qui s'étend depuis l'extrémité libre (7) jusqu'à une distance prédéterminée de la première extrémité (4), qui est ouvert perpendiculairement à l'axe de rotation (6), et qui est conçu pour recevoir la portion de montage (2) et la tête revolver (3).
